# EUROPÄISCHE PATENTSCHRIFT

(11) **EP 3 175 549 B1**
(45) Veröffentlichungstag und Bekanntmachung des Hinweises auf die Patenterteilung: **29.01.2020**
(21) Anmeldenummer: 15733347.7
(22) Anmeldetag: 11.06.2015
(51) Int. Cl.: H02S 20/24, H02S 20/10

(54) **VERFAHREN UND ANORDNUNG ZUR MONTAGE VON SOLARMODULEN AUF EINER GRUNDFLÄCHE**
METHOD AND ARRANGEMENT FOR MOUNTING SOLAR MODULES ON A BASE
PROCÉDÉ ET DISPOSITIF DE MONTAGE DE MODULES SOLAIRES PHOTOVOLTAÏQUES SUR UNE SURFACE DE BASE

(30) Priorität: 28.07.2014 DE 102014010949
(43) Veröffentlichungstag der Anmeldung: 07.06.2017
(73) Patentinhaber: HPF GmbH, 07607 Eisenberg (DE)
(72) Erfinder: ROPPELT, Helmut, 76139 Karlsruhe (DE)
(74) Vertreter: Kesselhut, Wolf
(86) Internationale Anmeldenummer: PCT/EP2015/001169
(87) Internationale Veröffentlichungsnummer: WO 2016/015796

(56) Entgegenhaltungen:
- WO-A2-2011/148139
- US-A1- 2011 194 900
- US-A1- 2013 276 304

## Beschreibung

Die Erfindung betrifft ein Verfahren und eine Anordnung zur Montage von Solarmodulen auf einer Grundfläche, insbesondere auf dem Erdboden, einem Flachdach oder einem Carport, gemäß dem Oberbegriff von Anspruch 1 und 6.

Solarmodule werden heutzutage in großen Solarfarmen mit mehreren 100 oder gar 1000 Modulen angeordnet, um die photovoltaisch gewonnene Energie in das öffentliche Stromnetz einzuspeisen. Hierbei ist es üblich, dass die Solarmodule auf Gestellen oder Ständern geneigt montiert werden, um die Module zum einen gegen Windsogkräfte zu sichern und zum anderen die lichtempfindliche Oberseite der Module zur Vergrößerung der einfallenden Lichtintensität in einem möglichst rechten Winkel gegenüber der einfallenden Sonnenstrahlung auszurichten. Obgleich sich hierbei durch die geneigte Anordnung der Module die aus dem Sonnenlicht gewonnene elektrische Leistung im gewissen Umfang steigern lässt, ist die Anordnung eines jeden Moduls auf einem eigenen Ständer oder Gestell aufgrund des damit einhergehenden Material- und Montageaufwands mit erheblichen Kosten verbunden.

Hinzu kommt, dass sich bei schräg einfallender Sonnenstrahlung durch die geneigte Anordnung bei einer Montage in parallelen Reihen eine gegenseitige Abschattung der Module ergibt, die die von den Modulen erzeugte elektrische Leistung wiederum nachteilig verringert. Um dies zu vermeiden werden die Module auf den Gestellen in größeren Abständen von bis zu mehreren Metern angeordnet, was zu einer nachteiligen Vergrößerung der belegten Grundfläche führt.

Die US 2011/0194900 A1 und US 2013/0276304 A1 beschreiben Solaranlagen, bei denen die Solarmodule an Gestellen befestigt werden, die auf einer Grundfläche verankert sind.

Weiterhin offenbart die WO 2011/148139 A2 eine Solaranlage, bei der die Solarmodule zur Montage auf einer Abfalldeponie unmittelbar an einer flüssigkeitsundurchlässigen flexiblen Folie befestigt sind, die auf die Oberseite des Deponie-Berges aufgebracht wird. Obgleich unterhalb der flüssigkeitsundurchlässigen Folie ein Kiesbett vorgesehen sein kann, gibt das Dokument dem Fachmann keinen Hinweis darauf, Solarmodule direkt vollflächig auf eine oberhalb einer Kunststofffolie angeordnete Kieslage aufzulegen.

Schließlich stellt es bei den bekannten Solarfarmen ein Problem dar, dass unterhalb der Gestelle über die Zeit hinweg Gras- und Pflanzenwuchs entsteht, der regelmäßig beseitigt werden muss, um ein Zuwachsen der einzelnen Module und eine damit einhergehende Leistungsreduzierung zu verhindern.

Demgemäß ist es eine Aufgabe der vorliegenden Erfindung ein Verfahren und eine Anordnung zur Durchführung des Verfahrens zu schaffen, mit denen sich photovoltaische Solarmodule, insbesondere Dünnschicht-Solarmodule, auf kostengünstige Weise und in kürzester Zeit auf einer ebenen Fläche montieren und mit einem minimalen Wartungsaufwand betreiben lassen.

Diese Aufgabe wird erfindungsgemäß durch ein Verfahren und eine Anordnung mit den Merkmalen von Anspruch 1 und 6 gelöst.

Weitere Merkmale der Erfindung sind in den Unteransprüchen enthalten.

Gemäß der Erfindung umfasst ein Verfahren zur Montage von photovoltaischen Solarmodulen, die insbesondere Dünnschicht-Solarmodule sind, jedoch auch herkömmliche polykristalline Solarmodule sein können, auf einer im Wesentlichen ebenen Grundfläche, wie einem eingeebneten Erd- oder Sandboden, einer Grasfläche, einem Flachdach, einem Hallendach oder auch einem Carport etc. die folgenden Verfahrensschritte:

Als erstes wird auf die ebene Fläche, die gegebenenfalls vorab mit einem geeigneten Bodenbearbeitungsgerät, wie z.B. einer Planierraupe oder dergleichen, grob eingeebnet wurde, eine Kunststofffolie aufgelegt. Bei der Kunststofffolie handelt es sich um eine bekannte Folie, die z.B. aus Polyurethan besteht und beispielsweise in der Landwirtschaft und im Gartenbau dazu eingesetzt wird, das Herauswachsen von im Boden angesiedelten Pflanzen, wie insbesondere Unkraut und Gras etc., zu verhindern. Unter dem Begriff "Folie" sind dabei auch die im Handel als Unkrautvliese vertrieben Vliesstoffe zu verstehen, die wasserdurchlässig sind, so dass Regenwasser ungehindert in den Boden ablaufen kann.

Als nächstes wird auf die erste Folie eine erste Lage aus Kies aufgebracht, wobei unter "Kies" in der vorliegenden Anmeldung auch sämtliche kiesartigen Mischungen, wie beispielsweise so genannte "Mineralgemische", zu verstehen sind. Die bevorzugte Korngröße des Kies in der ersten Lage, die eine Mindestdicke zwischen 1 cm und 5 cm oder auch mehr besitzen kann, liegt vorzugsweise im Bereich zwischen 10 und 25 mm.

Nach dem Aufbringen der ersten Lage aus Kies wird die Oberseite derselben mit einem geeigneten Werkzeug, wie beispielsweise einem Rechen, abgezogen und eingeebnet. Hierbei ergibt sich durch die Eigenschaften des Kies der Vorteil, dass die Oberseite der ersten Lage gewünschten Falls auch mit einer leichten Neigung von z.B. 5° bis 10° oder auch mehr versehen werden kann, um eine geneigte Ebene zur Ablage der Solarmodule zu erzeugen, die einen Abfluss von Regenwasser von der Oberseite der Module begünstig. Die in der zuvor beschriebenen Weise erhaltene ebene Ablagefläche für die Solarmodule ist hierbei vorzugsweise in Richtung zur Sonne hin geneigt, wobei am Fuße einer jeden geneigte Fläche gegebenenfalls eine zusätzliche Vertiefung in den Untergrund eingebracht werden kann, welche nach dem Auffüllen mit Kies als Ablauf- und/oder Versickerungskanal für Regenwasser dient. Die Vertiefung ist dazu mit einer wasserundurchlässigen Folie belegt, so dass das Regenwasser über die mit einem leichten Gefälle verlegte Vertiefung nach Art eines Kanals zu einem gemeinsamen Sammelreservoir geleitet werden kann, aus dem es z.B. zur Reinigung der Solarmodule bei Bedarf entnommen werden kann.

Im Anschluss daran werden die Solarmodule vorzugsweise in Reihen und mit geringen Abständen von wenigen Zentimetern in Gruppen entlang von Reihen oder auch nebeneinanderliegend auf die eingeebnete Oberseite der ersten Lage aus Kies direkt aufgelegt. Um die Verlegung der zu den auf der Unterseite der Solarmodule angeordneten Anschlussboxen führenden elektrischen Anschlussleitungen zu erleichtern, können in die ansonsten ebene Oberseite der ersten Kieslage zusätzliche Vertiefungen eingebracht werden kann, so dass die Solarmodule mit ihren Unterseiten vollflächig auf der Oberseite der ersten Kieslage aufliegen. Die elektrischen Leitungen, die die Anschlussboxen der Solarmodule miteinander, bzw. mit einem bekannten Wechselrichter verbinden, sind bei der bevorzugten Ausführungsform der Erfindung mit Kies bedeckt, so dass diese von außen her nicht zu erkennen sind und Manipulationen erschwert werden.

Durch die Erfindung ergibt sich der Vorteil, dass leichte Unebenheiten in der ebenen Fläche, d.h. z.B. dem Erdboden, durch den Kies kostengünstig mit geringem Aufwand ausgeglichen werden können, so dass eine vollflächige Auflage der Unterseite der Solarmodule auf dem Kies sichergestellt werden kann. Diese sorgt dafür, dass die Solarmodule, insbesondere im Falle von Dünnschicht-Solarmodulen, durch Windsogkräfte üblicher Stärke nicht angehoben werden. Darüber hinaus stellt es in Verbindung mit Dünnschicht-Solarmodulen einen weiteren Vorteil der Erfindung dar, dass die Module von unten her durch den Kies gekühlt und die durch das eingestrahlte Sonnenlicht erzeugte Wärme wirkungsvoll abgeführt werden, wodurch der Nachteil des im Vergleich zu Dickschicht-Solarmodulen geringeren Wirkungsgrads der kostengünstigeren Dünnschicht-Solarmodule wieder kompensiert wird.

Ein weiterer Vorteil der erfindungsgemäßen Lösung besteht darin, dass die Folie wirksam einen Bewuchs von Grünpflanzen und Unkraut zwischen und unterhalb der Module verhindert, wodurch sich der Aufwand - und damit die Kosten - für das Entfernen des Bewuchses gegenüber den üblichen Solarfarmen mit auf Gestellen angeordneten Solarmodulen erheblich reduzieren.

Ein weiterer Vorteil der Erfindung besteht darin, dass sich nicht nur die Module, sondern auch der Kies und die Folie selbst nach mehreren Jahren noch sehr einfach und umweltfreundlich wieder entfernen lassen, um die Fläche für andere Zwecke zu nutzten. So kann die Folie z.B. einer thermischen Verwertung zugeführt werden, wohingegen der Kies ohne weitere Aufbereitung entweder direkt als Basis für eine neue Solaranlage eingesetzt oder aber einer direkten andersartigen Verwendung, z.B. als Füllsubstanz im Straßenbau, zugeführt werden kann.

Bei der bevorzugten Ausführungsform des erfindungsgemäßen Verfahrens ist zwischen der ersten Lage aus Kies und der ersten Kunststofffolie eine zweite Zwischenlage aus Kies, und zwischen der Zwischenlage und der ersten Lage aus Kies eine zweite Kunststofffolie angeordnet. Die zweite Kunststofffolie ist gemäß einer ersten Ausführungsform der Erfindung eine zuvor beschriebene wasserdurchlässige Folie oder ein wasserdurchlässiger Vlieswerkstoff, der das Wachstum von Unkraut durch von oben her in die Kieslage eindringende Pflanzenpollen wirksam unterbindet. Alternativ kann die zweite Folie jedoch auch eine wasserundurchlässige Folie sein.

Der Kies in der zweiten Zwischenlage ist vorzugsweise feinkörniger als der Kies in der ersten Lage und dient dazu, Unebenheiten im Boden mit hoher Präzision auszugleichen, so dass nach dem Auflegen der zweiten Kunststofffolie im Falle eines wasserundurchlässigen Folienmaterials eine möglichst ebene, bevorzugt in einem Winkel von ca. 3 bis 5 ° gegenüber der Horizontalen geneigte wasserdichte Fläche unterhalb der ersten Kieslage entsteht, über die das in die erste Kieslage eindringende Regenwasser in eine geeignete, zuvor erwähnte Rinne ablaufen kann, um dieses in einem gemeinsamen Reservoir zu sammeln.

Bei der zuletzt beschriebenen Ausführungsform der Erfindung ist die Oberseite der ersten Lage aus Kies in dem Bereich unterhalb eines Solarmoduls im Wesentlichen ebenen und gegenüber der Horizontalen in einem Winkel zwischen 3° und 30°, insbesondere 5° bis 10°, geneigt.

Um die Solarmodule auch in Starkwindgebieten, in denen die Windsogkräfte die üblichen Maximalwerte erheblich überschreiten, zuverlässig zu sichern, kann zwischen der Oberseite der obersten Kieslage und der Unterseite eines jeden Moduls selbsthärtender Kunststoffschaum eingebracht werden, der dafür sorgt, dass die Kiesbestandteile miteinander und mit der Unterseite der Module zu einer Einheit verklebt werden, wodurch sich die von unten her auf das Modul wirkenden Haltekräfte auf einfache Weise erheblich erhöhen lassen. Als Kunststoffmaterial kommt insbesondere ein aus der Bautechnik bekannter expandierender Kunststoffschaum, z.B. PU-Schaum, zum Einsatz.

Die zuvor beschriebenen Ausführungsformen der Erfindung besitzen den Vorteil, dass sich die Module mit geringem Aufwand auf der Fläche fixieren lassen, wodurch insbesondere bei der Verarbeitung von Dünnschicht-Solarmodulen mit einer vergleichsweise geringen mechanischen Stabilität durch den zunächst expandierenden und dann aushärtenden Schaum eine sehr stabile Unterlage für die Module geschaffen wird, die diese zuverlässig gegen einen Bruch schützt. Ein weiterer Vorteil ist darin zu sehen, dass die Module sich bei einem Defekt erforderlichen Falls dennoch mit geringem Aufwand aus dem Kies-Schaumverbund lösen lassen, um z.B. die Elektronik in den Anschlussboxen zu tauschen.

Nach einem weiteren der Erfindung zugrunde liegenden Gedanken werden die Solarmodule in einem Array in wenigstens zwei parallelen Reihen nebeneinander angeordnet.

Die Erfindung wird nachfolgend mit Bezug auf die Zeichnungen anhand einer erfindungsgemäßen Anordnung zur Montage von Solarmodulen mit Bezug auf die Zeichnung beschrieben.

In den Zeichnungen zeigen:
- Fig. 1: eine schematische räumliche Teilansicht von vier Solarmodulen, welche gemäß einer ersten Ausführungsform des erfindungsgemäßen Verfahrens auf einer Grundfläche angeordnet sind, und
- Fig. 2: eine schematische räumliche Teilansicht von vier Solarmodulen, welche gemäß einer zweiten Ausführungsform des erfindungsgemäßen Verfahrens auf einer Grundfläche angeordnet sind.

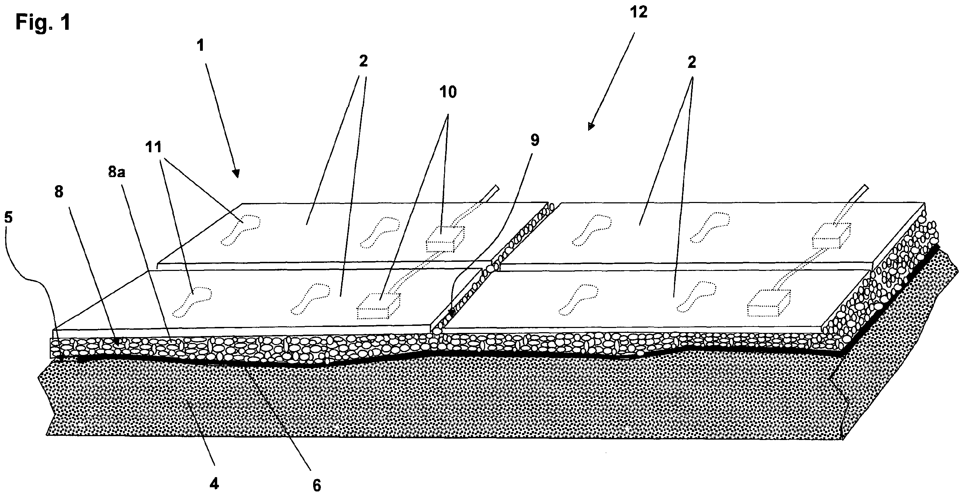

Wie in Fig. 1 gezeigt ist, umfasst eine Anordnung 1 zur Montage von Solarmodulen 2 auf einer Grundfläche 4, bei der es sich im dargestellten Falle um den an der Oberseite geringfügig unebenen Erdboden handelt, eine erste auf die Oberseite 5 der Grundfläche 4 aufgelegte Kunststofffolie 6, die vorzugsweise den gesamten Bereich, in welchem die Solarmodule 2 auf der Grundfläche 4 angeordnet werden sollen, abdeckt. Auf der Kunststofffolie 6, ist eine erste Lage 8 aus Kies 8a angeordnet, die nach unten hin die Unebenheiten in der Grundfläche 4 auffüllt und an ihrer Oberseite 9 mit einem nicht näher gezeigten Rechen oder dergleichen eingeebnet wurde. Nach dem Einebnen der Oberseite 9 der ersten Lage 8 werden in den Bereichen in denen sich die Anschlussboxen 10 sowie Leitungen 12 der jeweiligen Solarmodule 2 befinden, Vertiefungen in Kies 8a eingebracht und im Anschluss daran die Solarmodule 2 nacheinander in parallelen Reihen auf dem Kies 8a abgelegt, so dass diese mit ihrer Unterseite vollflächig auf der Oberseite der ersten Lage 8 aufliegen.

Zwischen den vorzugsweise U-förmig verlegten Reihen können dabei nicht näher gezeigte begehbare Weg-Abschnitte angeordnet werden, um die Module zu reinigen, bzw. defekte Module gegebenenfalls austauschen zu können.

Um die Module dabei fest mit dem Kies 8a der ersten Lage 8 zu verbinden, wird die Oberseite der ersten Lage 8a unmittelbar vor dem Auflegen der Module 2 punktuell oder vollflächig mit einem bekannten Montageschaum 11 besprüht, der vor dem Aushärten expandiert und dadurch ca. 0,5 bis 2 cm in die Hohlräume im Kies 8a eindringt und letzteren mit der Unterseite des jeweiligen Moduls 2 verbindet.

Um die in der zuvor beschriebenen Weise in einem Array 12 auf der Grundfläche 4 montierten Solarmodule 2 zusätzlich gegen Wind und Regen zu schützen, kann um das gesamte Array 12 ein nicht näher gezeigter Schutzwall oder eine Mauer angeordnet sein, der bei der direkten Montage auf dem Erdboden oder einer Grasfläche kostengünstig als Erdwall ausgeführt ist.

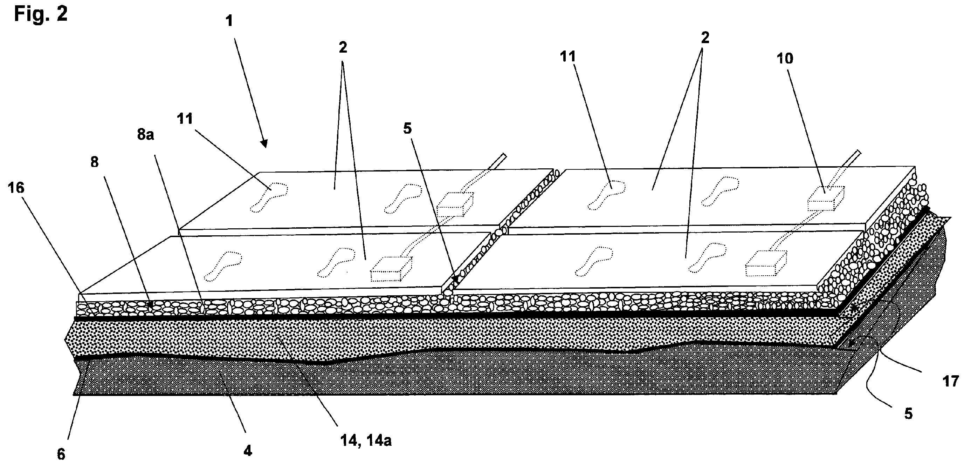

Bei der in Fig. 2 gezeigten Ausführungsform der Erfindung ist zwischen der ersten Lage 8 aus Kies 8a und der ersten Kunststofffolie 6 zusätzlich eine zweite Zwischenlage 14 aus Kies 14a angeordnet, der vorzugsweise eine feinere Körnung als der Kies 8a der ersten Lage 8 besitzt. Wie der Darstellung der Fig. 2 dabei weiterhin entnommen werden kann, ist zwischen der zweiten Zwischenlage 14 aus Kies 14 a und der ersten Lage 8 aus Kies 8a eine zweite Kunststofffolie 16 angeordnet, die bevorzugt in gleicher Weise eine Polyurethanfolie oder ein wasserdurchlässiger Vlieswerkstoff ist, wie die erste Kunststofffolie 6. Vor dem Auflegen der zweiten Folie 16 wird die Oberseite 17 der zweiten Zwischenlage 14 aus Kies 14a beispielsweise mit einem Rechen eingeebnet und gegebenenfalls mit einer leichten Neigung von vorzugsweise 3-5° versehen, um ein Ablaufen von Regenwasser entlang der Oberseite der zweiten Folie 16 sicherzustellen, welches in einer nicht näher gezeigten Sammelrinne gesammelt und über diese aus dem Bereich des Arrays 12 abgeführt werden kann. Hierdurch wird sichergestellt, dass sich unterhalb der Solarmodule 2 keine Pfützen bilden.

### Liste der Bezugszeichen

- 1: erfindungsgemäße Anordnung
- 2: Solarmodul
- 4: Grundfläche
- 5: Oberseite der Grundfläche
- 6: erste Folie
- 8: erste Kieslage
- 8a: Kies
- 9: Oberseite der ersten Kieslage
- 10: Anschlussbox
- 11: Kunststoffschaum
- 12: Array von Solarmodulen
- 14: zweite Kieslage
- 14a: Kies der zweiten Kieslage
- 16: zweite Folie
- 17: Oberseite der zweiten Kieslage

## Patentansprüche

1. Verfahren zur Montage von photovoltaischen Solarmodulen auf einer Grundfläche (4)
**gekennzeichnet durch** die folgenden Verfahrensschritte:
Aufbringen einer ersten Kunststofffolie (6) auf die Oberseite (5) der Grundfläche (4),
Aufbringen einer ersten Lage (8) aus Kies (8a) auf die Kunststofffolie (6) und vollflächiges Auflegen der Solarmodule (2) auf die erste Lage (8) aus Kies (8a).

2. Verfahren nach Anspruch 1,
**dadurch gekennzeichnet,**
**dass** zwischen der ersten Lage (8) aus Kies (8a) und der ersten Kunststofffolie (6) eine zweite Zwischenlage (14) aus Kies (14a), und zwischen der zweiten Zwischenlage (14) aus Kies (14a) und der ersten Lage (8) aus Kies (8a) eine zweite Kunststofffolie (16) angeordnet wird.

3. Verfahren nach Anspruch 1 oder 2,
**dadurch gekennzeichnet,**
**dass** die Solarmodule (2) auf dem Kies (8a, 14a) durch selbsthärtenden Kunststoffschaum (11), insbesondere PU-Schaum, fixiert werden.

4. Verfahren nach einem der vorhergehenden Ansprüche,
**dadurch gekennzeichnet,**
**dass** die Oberseite (9) der ersten Lage (8) aus Kies (8a) in dem Bereich unterhalb eines Solarmoduls (2) im Wesentlichen ebenen und gegenüber der Horizontalen in einem Winkel zwischen 3° und 30°, insbesondere 5° bis 10°, geneigt ist.

5. Verfahren nach Anspruch 2 und 4,
**dadurch gekennzeichnet,**
**dass** die zweite Zwischenlage (14) aus Kies (14a) eine gegenüber der Waagerechten in einem Winkel zwischen 3° bis 10° geneigte, im Wesentlichen ebene Oberfläche aufweist.

6. Anordnung zur Montage von Solarmodulen (2) auf einer im Wesentlichen ebenen Grundfläche (4), insbesondere dem Erdboden, einem Flachdach oder einem Carport,
**gekennzeichnet durch**
eine erste auf die Oberseite (5) der Grundfläche (4) aufgelegte Kunststofffolie (6) sowie eine auf der Kunststofffolie (6) angeordnete erste Lage (8) aus Kies (8a), auf der die Solarmodule (2) vollflächig aufgelegt sind.

7. Anordnung nach Anspruch 6,
**dadurch gekennzeichnet,**
**dass** zwischen der ersten Lage (8) aus Kies (8a) und der ersten Kunststofffolie (6) eine zweite Zwischenlage (14) aus Kies (14a), und zwischen der zweiten Zwischenlage (14) aus Kies (14a) und der ersten Lage (8) aus Kies (8a) eine zweite Kunststofffolie (16) angeordnet ist.

8. Anordnung nach Anspruch 6 oder 7
**dadurch gekennzeichnet,**
**dass** die Solarmodule (2) in einem Array (12) mit einer Vielzahl von benachbarten Solarmodulen (2) angeordnet sind.

9. Anordnung nach Anspruch 8,
**dadurch gekennzeichnet,**
**dass** das Array (12) zumindest auf einer Seite durch einen Schutzwall oder eine Mauer gegen die direkte Einwirkung von Wind und Regen geschützt ist.

## Claims

1. Method for mounting photovoltaic solar modules on a base surface (4),
**characterized by** the following method steps:
applying a first plastic sheet (6) to the upper side (5) of the base surface (4),
applying a first layer (8) of gravel (8a) to the plastic sheet (6) and placing the solar modules (2) with full-surface contact onto the first layer (8) of gravel (8a).

2. Method according to Claim 1,
**characterized**
**in that** a second intermediate layer (14) of gravel (14a) is arranged between the first layer (8) of gravel (8a) and the first plastic sheet (6), and a second plastic sheet (16) is arranged between the second intermediate layer (14) of gravel (14a) and the first layer (8) of gravel (8a).

3. Method according to Claim 1 or 2,
**characterized**
**in that** the solar modules (2) are fixed on the gravel (8a, 14a) by means of self-curing plastic foam (11), in particular PU foam.

4. Method according to one of the preceding claims,
**characterized**
**in that** the upper side (9) of the first layer (8) of gravel (8a) in the region below a solar module (2) is substantially planar and inclined with respect to the horizontal at an angle of between 3° and 30°, in particular 5° to 10°.

5. Method according to Claims 2 and 4,
**characterized**
**in that** the second intermediate layer (14) of gravel (14a) has a substantially planar surface which is inclined with respect to the horizontal at an angle of between 3° and 10°.

6. Arrangement for mounting solar modules (2) on a substantially planar base surface (4), in particular the ground, a flat roof or a carport,
**characterized by**
a first plastic sheet (6) which is placed onto the upper side (5) of the base surface (4), and a first layer (8) of gravel (8a) which is arranged on the plastic sheet (6) and on which the solar modules (2) are placed with full-surface contact.

7. Arrangement according to Claim 6,
**characterized**
**in that** a second intermediate layer (14) of gravel (14a) is arranged between the first layer (8) of gravel (8a) and the first plastic sheet (6), and a second plastic sheet (16) is arranged between the second intermediate layer (14) of gravel (14a) and the first layer (8) of gravel (8a).

8. Arrangement according to Claim 6 or 7,
**characterized**
**in that** the solar modules (2) are arranged in an array (12) with a plurality of adjacent solar modules (2).

9. Arrangement according to Claim 8,
**characterized**
**in that** the array (12) is protected at least on one side by a protective barrier or a wall against the direct action of wind and rain.

## Revendications

1. Procédé de montage de modules solaires photovoltaïques sur une surface de base (4), **caractérisé par** les étapes de procédé suivantes :
pose d'une première feuille de matière synthétique (6) sur la face supérieure (5) de la surface de base (4) ;
application d'une première couche (8) de gravier (8a) sur la feuille de matière synthétique (6) et pose des modules solaires (2) sur toute leur surface sur la première couche (8) de gravier (8a) .

2. Procédé selon la revendication 1,
**caractérisé en ce que**,
une deuxième couche intermédiaire (14) de gravier (14a) est disposée entre la première couche (8) de gravier (8a) et la première feuille de matière synthétique (6) et une deuxième feuille de matière synthétique (16) est disposée entre la deuxième couche intermédiaire (14) de gravier (14a) et la première couche (8) de gravier (8a).

3. Procédé selon la revendication 1 ou 2,
**caractérisé en ce que**
les modules solaires (2) sont fixés sur le gravier (8a, 14a) par de la mousse synthétique autodurcissante (11), en particulier de la mousse PU.

4. Procédé selon l'une quelconque des revendications précédentes,
**caractérisé en ce que**
dans la région située sous un module solaire (2), la face supérieure (9) de la première couche (8) de gravier (8a) est essentiellement plane et inclinée par rapport à l'horizontale d'un angle compris entre 3° et 30°, en particulier compris entre 5° et 10°.

5. Procédé selon les revendications 2 et 4,
**caractérisé en ce que**
la deuxième couche intermédiaire (14) de gravier (14a) présente une surface essentiellement plane et inclinée par rapport à l'horizontale d'un angle compris entre 3° et 10°.

6. Dispositif de montage de modules solaires (2) sur une surface de base (4) essentiellement plane, en particulier le sol, un toit plat ou un abri pour voitures,
**caractérisé par**
une première feuille de matière synthétique (6) posée sur la face supérieure (5) de la surface de base (4) et par une première couche (8) de gravier (8a) disposée sur la feuille de matière synthétique (6) sur laquelle les modules solaires (2) sont posés sur toute leur surface.

7. Dispositif selon la revendication 6,
**caractérisé en ce que**
une deuxième couche intermédiaire (14) de gravier (14a) est disposée entre la première couche (8) de gravier (8a) et la première feuille de matière synthétique (6) et une deuxième feuille de matière synthétique (16) est disposée entre la deuxième couche intermédiaire (14) de gravier (14a) et la première couche (8) de gravier (8a).

8. Dispositif selon la revendication 6 ou 7,
**caractérisé en ce que**
les modules solaires (2) sont disposés dans un ensemble (12) composé d'une pluralité de modules solaires (2) juxtaposés.

9. Dispositif selon la revendication 8,
**caractérisé en ce que**
l'ensemble (12) est protégé, au moins sur un côté, par un remblai de protection ou par un mur contre l'influence directe de la pluie et du vent.
